# EUROPÄISCHE PATENTSCHRIFT

(11) **EP 3 034 918 B1**
(45) Veröffentlichungstag und Bekanntmachung des Hinweises auf die Patenterteilung: **15.02.2017**
(21) Anmeldenummer: 14198187.8
(22) Anmeldetag: 16.12.2014
(51) Int. Cl.: F16K 27/02

(54) **Füllventil**
Filling valve
Soupape de remplissage

(43) Veröffentlichungstag der Anmeldung: 22.06.2016
(73) Patentinhaber: HAWE Hydraulik SE, 81673 München (DE)
(72) Erfinder: Glaser, Johannes, 80798 München (DE); Neumair, Georg, 85402 Thalhausen (DE); Eiblmeier, Thomas, 94424 Arnstorf (DE)
(74) Vertreter: Grosse Schumacher Knauer von Hirschhausen

(56) Entgegenhaltungen:
- EP-B1- 1 039 185
- JP-A- S57 156 896
- US-A- 2 152 870

## Beschreibung

Die Erfindung betrifft ein Füllventil der im Oberbegriff des Patentanspruchs 1 angegebenen Art.

In EP 10 39 185 B1 wird ein aus der DE 299 05 322 U1 bekanntes Füllventil als Stand der Technik (Fig. 5) gezeigt und beschrieben, bei dem die Innen- und Außenwände jedes nierenförmigen Durchgangs zueinander parallel sind und mit der Achse des Sitzgehäuses einen Neigungswinkel von etwa 40° einschließen. Bei dem in EP 10 39 185 B1 gegenüber dem vorerwähnten Füllventil verbesserten Füllventil schließen die Innen- und Außenwände mit der Achse einen sogar noch größeren Neigungswinkel ein. Aus dem relativ großen Neigungswinkel der Innen- und Außenwände der nierenförmigen Durchgänge resultiert bei gegebenem Nutzdurchmesser des Füllventils die Notwendigkeit, die oberen Mündungen der Durchgänge achsparallel zu formen, was zusätzliche Bearbeitungsschritte erfordert. Der Übergang von der Außenwand zum Sitz ist stufenartig. An der der Aufsteuerung abgewandten Seite des Sitzgehäuses ist eine konische Ansenkung bis zum Sitz geformt, die einen etwas kleineren Kegelwinkel hat als die kegelige Oberseite des Tellers des Tellerventils. Aus diesen geometrischen Verhältnissen resultiert bei der Auslegung des Füllventils entsprechendem, maximalem Volumenstrom und voll geöffnetem Tellerventil in jeder Durchströmrichtung, speziell im Bereich starker Umlenkung über den Sitz und um den Rand des Tellers ein unerwünscht hoher Druckverlust. Dieser Druckverlust begrenzt den maximalen Volumenstrom und somit die Geschwindigkeit des Pressenkolbens, der unter Nutzen des Füllventils seinen Leerhub bis zum eigentlichen Presszyklus bzw. seinen Rückhub nach Ausführen des Presszyklus so schnell wie möglich ausführen können sollte, um die Zykluszeit zu optimieren. Bei dem in dem bekannten Füllventil resultiert z.B. eine Überhöhung des maximalen Volumenstroms beispielsweise um 20 % unvermeidbar in Kavitationserscheinungen als Folge des zu starken Unterdrucks. Der starke Druckverlust ergibt sich aus einer sehr starken Erhöhung der Strömungsgeschwindigkeit speziell um den Rand des Tellers des Tellerventils, bedingt durch die relativ starke Umlenkung in der Strömung durch das Ventilgehäuse zur andern Seite, und auch durch lokale Querschnittsverengungen. Die Strömung ist nicht im gesamten zur Verfügung stehenden Strömungsquerschnitt gleichmäßig schnell, sondern es sind relativ viele Totzonen im Strömungsbild enthalten.

Bei dem aus JP S 57 156 896 A bekannten Füllventil schließen die in den Fig. 2 und 3 gezeigten Durchgänge mit ihren Außen- und Innenwänden mit der Achse des Sitzes einen Neigungswinkel von 33° bis 35° ein. Aus diesem relativ großen Neigungswinkel resultiert im Bereich des Sitzes eine starke Umlenkung sowie ein unerwünscht hoher Druckverlust um den Rand des Tellers.

Bei dem aus US 2152870 A bekannten Füllventile schließen die Wände der Durchgänge mit der Achse des Sitzes sogar noch größere Neigungswinkel von mehr als 60° ein, woraus unerwünscht große Druckverluste resultieren.

Die Forderung von Anwendern des Füllventils, höhere Pressenzylindergeschwindigkeiten fahren zu können als bisher, lässt sich mit den bekannten Konzepten nicht erfüllen, da der maximal mögliche Volumenstrom in jeder Baugröße des Füllventils unzweckmäßig begrenzt ist.

Der Erfindung liegt die Aufgabe zugrunde, ein Füllventil der eingangs genannten Art so zu verbessern, dass bei gegebener Baugröße des Füllventils eine erhebliche Steigerung des maximalen Volumenstroms ohne Gefahr einer Kavitationswirkung möglich ist.

Die gestellte Aufgabe wird mit den Merkmalen des Patentanspruchs 1 gelöst.

Aus dem relativ kleinen, mit der Achse eingeschlossenen Neigungswinkel von nur 20° bis 25° zumindest der Außenwand lässt sich bei Erstellung des Füllventils aus Stahl für eine gegebene Baugröße des Füllventils der maximale Volumenstrom ohne Kavitationsgefahr um ca. 20 % steigern und wird der Druckverlust in der Strömung um über etwa 30 % reduziert, wobei der Neigungswinkel der Außenwand kombiniert sein kann mit weiteren strömungstechnischen Optimierungen. Der kleine Neigungswinkel der Außenwand hat sich zunächst in ausgeführten Computersimulationen für beide Strömungsrichtungen mit Geschwindigkeits- und Druck-Kontur-Plots als überraschende Lösung des Problems angedeutet. Die geforderte Steigerung zeigt sich im erwarteten Ausmaß in Prüfanordnungen, in denen Hydraulikmedien verarbeitet werden, wie sie in Pressen und Spritzgussmaschinen zum Einsatz kommen. Die Steigerung des maximalen Volumenstroms ermöglicht eine Erhöhung der Geschwindigkeit des Pressenkolbens bei gleicher Baugröße des eingesetzten Füllventils. Ein weiterer Vorteil der Steilheit der Außenwand liegt darin, dass der Durchgang in einem Arbeitsgang von einer oder von der anderen Seite des Sitzgehäuses spanend, z.B. durch Fräsen, gebildet werden kann und nicht zwischen mehreren Bearbeitungsschritten umgerüstet werden muss. Auch ermöglicht der Neigungswinkel im Durchgang eine längere Führung für den Schaft des Tellerventils. Die Innenwand und die Außenwand können den gleichen Neigungswinkel mit der Achse einschließen. Die Durchgangsweite bleibt somit im Wesentlichen konstant, wobei sich jedoch der nutzbare Querschnitt in Richtung zum Sitz verringert, weil die untere Mündung des Durchgangs auf einem kleineren Durchmesser liegt als die obere Mündung. Um diesen geometrisch bedingten Umstand zumindest teilweise zu kompensieren, kann die Innenwand zumindest angrenzend an den Sitz mit der Achse einen Neigungswinkel zwischen 40° und 25°einschließen, so dass die Durchgangsweite in Richtung zum Sitz zunimmt. Dabei ist der Neigungswinkel der Innenwand bezogen auf die Achse umso kleiner, desto kleiner der Neigungswinkel der Außenwand ist.

Bei einer zweckmäßigen Ausführungsform sind im Sitzgehäuse zwei Stege, vorzugsweise mit in Richtung zum Sitz abnehmender Stegstärke, und zwischen diesen zwei nierenförmige, vorzugsweise zur Achse des Füllventils konzentrische, gefräste Durchgänge vorgesehen. In dieser Ausbildung lässt sich eine maximale Steigerung des Volumenstroms erzielen. Alternativ könnten anstelle nierenförmiger Durchgänge auch Bohrungen eines Bohrungskranzes die Durchgänge definieren. Jedoch ergeben sich bei einem Bohrungskranz ein gegenüber nierenförmigen Durchgängen verringerter Gesamtströmungsquerschnitt und eine Zunahme des Druckverlustes, so dass Ausführungen mit nierenförmigen Durchgängen der Vorzug zu geben ist.

Bei einer weiteren Ausführungsform werden die Strömungsverhältnisse weiter verbessert, indem die Außenwand mit einer konvexen Rundung zu einem annähernd achsparallelen Übergang zum Sitz führt. Dieser Übergang ist, vorzugsweise, so lang, dass er etwa 10 % des Sitzdurchmessers beträgt, damit er anhaftende Strömung sauber in Richtung zur Kante des abgehobenen Tellers lenkt. Eine andere günstige Maßnahme besteht darin, die Innenwand an einem ringförmigen Wulst enden zu lassen, der - in einem Achsschnitt gesehen - von der Innenwand bis in eine Aufnahmebohrung des Schafts des Tellerventils konvex gerundet ist. Dieser Maßnahme verbessert die Anströmung beispielsweise aus dem Durchgang zum Schaft und zur Oberseite des Tellers.

Für den jeweiligen Anwendungsfall gibt es eine bestimmte Baugröße des Füllventils. In den Seiten des Sitzgehäuses sind Ringdichtungen versenkt angeordnet, die einerseits die Abdichtung zum Pressenzylinder und andererseits die Abdichtung zu einem Tank ausführen, und zumindest auf der Seite des Pressenzylinders einen inneren Nutzdurchmesser des Füllventils definieren, der so groß wie möglich gewählt ist. Ein großer maximaler Volumenstrom wird insbesondere dann erzielt, wenn der Sitzdurchmesser etwa 75 % bis 85 % des Nutzdurchmessers entspricht, d.h. der Sitz und korrespondierend damit auch der Außendurchmesser des Tellerventils gegenüber bekannten Lösungen derselben Baugröße vergrößert sind, beispielsweise um 8 % bis 10 %.

Einerseits im Hinblick auf verbesserte Strömungsverhältnisse und andererseits im Hinblick auf die Vergrößerung des Sitzes und die dadurch mit einer quadratischen Funktion vergrößerte Fläche des Tellers des Tellerventils ist es zweckmäßig, dass der Teller, zum Durchgang weisend, eine nahezu ebene Oberseits, jedoch eine zentrisch markant bombierte Unterseite aufweist. Die Bombierung an der Unterseite erhöht die Druckfestigkeit des Tellers unter dem Druck im Pressenzylinder bei Anlage am Sitz.

Eine weitere Maßnahme zur Verbesserung der Strömungsverhältnisse besteht darin, zwischen dem Sitz und der Teller-Seite des Sitzgehäuses einer Ansenkung in der Teller-Seite eine konkave, annähernd einem Viertelkreis entsprechende Rundung vorzusehen. Dies ergibt ein besseres Strömungsbild im Vergleich zu einer konischen Ausformung.

Eine weitere Maßnahme zur Verbesserung der Strömungsverhältnisse und damit zur Steigerung des maximalen Volumenstroms liegt darin, dass - zumindest in einem Schnitt durch die Stege gesehen - an der Teller-Seite im Anschluss an den Sitz eine zentrische und runde Vertiefung durch Drehbearbeitung mit einer den Wulst umfassenden, im Wesentlichen ebenen und zur Achse senkrechten Deckwand anzuordnen. Günstig wird in der Vertiefung eine randseitige Hinterschneidung vorgesehen, und, vorzugsweise, die Deckwand in einen Abstand vom Sitz gesetzt, der maximal 10 % des Nutzdurchmessers entspricht, vorzugsweise etwa 5 % bis 8 % des Nutzdurchmessers. Aus dieser Vertiefung und insbesondere der Hinterschneidung resultieren sehr saubere Übergänge von den nierenförmigen Durchgängen in den Sitzbereich und den Wulst. Der Wulst kann in der Deckwand der Vertiefung einen Außendurchmesser haben, der etwa 40 % des Sitzdurchmessers entspricht.

Schließlich kann es zweckmäßig sein, wenn zwischen der Innenwand und der Außenwand des nierenförmigen Durchgangs an den Enden der Nierenform in etwa halbkreisförmig konkave und die Stege begrenzende Übergänge geformt sind. In Verbindung mit der an der Teller-Seite geformten Vertiefung ergeben sich saubere Übergänge, mit welchen die Gefahr von Turbulenzen und/oder Totzonen in der Strömung minimiert ist.

Ausführungsformen des Erfindungsgenstandes werden anhand der Zeichnung erläutert. Es zeigen:
- Fig. 1: eine Perspektivansicht eines Füllventils,
- Fig. 2: eine Draufsicht auf das Füllventil von Fig. 1,
- Fig. 3: einen Achsschnitt in der Schnittebene I-I in Fig. 2,
- Fig. 4: einen Achsschnitt in der Schnittebene II-II in Fig. 2, und
- Fig. 5: den Achsschnitt in der Schnittebene II-II in Fig. 2 bei voll abgehobenem Tellerventil.

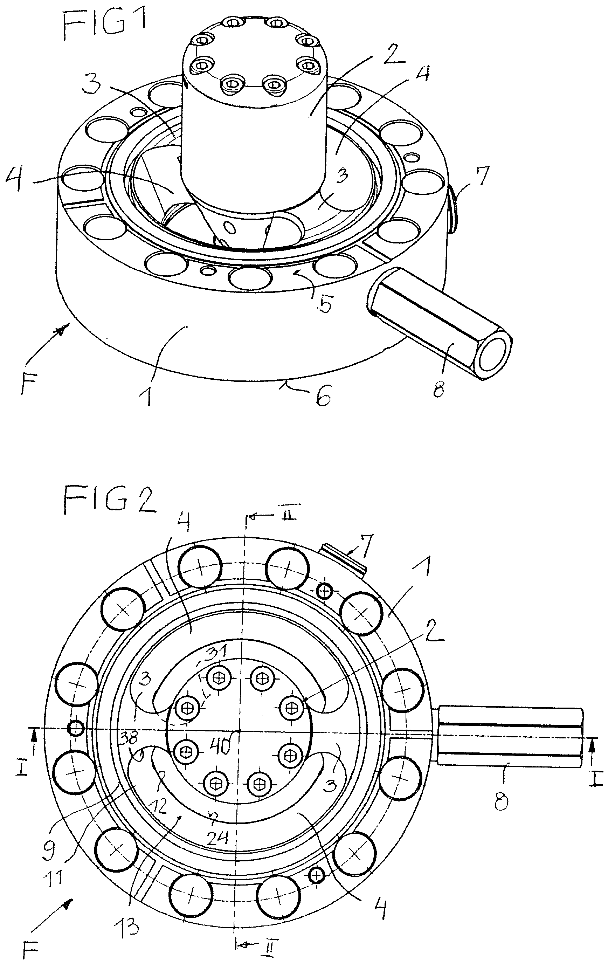

Ein Füllventil F gemäß Fig. 1 ist insbesondere zur Verwendung in hydraulischen Pressen oder hydraulisch betriebenen Spritzgussmaschinen bestimmt, beispielsweise um einen einen Pressenkolben enthaltenden Pressenzylinder rasch füllen und entleeren zu können. Das Füllventil kann hydraulisch aufgesteuert werden und in einer Nachsaugsituation selbsttätig öffnen.

Das Füllventil F weist ein scheibenförmiges Sitzgehäuse 1 aus Stahl auf, an dem an einer Seite 5 auf Stegen 3 eine Aufsteuerung 2 montiert ist. Zwischen den Stegen 3 sind nierenförmige Durchgänge 4 durch spanende Bearbeitung geformt. Am Außenumfang des Sitzgehäuses 1 kann eine Zylinderschraube 8 montiert werden, die einen Hydraulikzugang zur Aufsteuerung 2 enthält. Ferner kann eine Verschhlussschraube 7 an der Außenseite montiert sein. Die der Seite 5 abgewandte Seite des Sitzgehäuses 1 ist mit 6 bezeichnet.

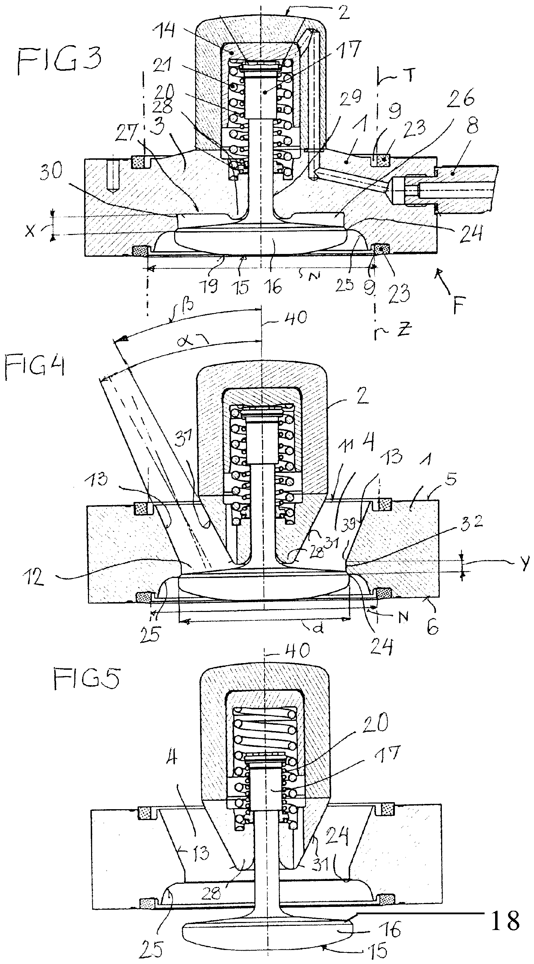

In der Draufsicht des Füllventils in Fig. 2 ist zu erkennen, dass die beiden Stege 3 zwei nierenförmige Durchgänge 4 begrenzen, die zur Achse 40 des Sitzgehäuses konzentrisch sind und jeweils eine Außenwand 13 und eine Innenwand 31 aufweisen, die über die Stege 3 begrenzende, etwa halbrunde Übergänge 38 miteinander verbunden sind, derart, dass der Seite 5 zugewandt eine Mündung 11 und im Bereich eines innen im Sitzgehäuse 1 geformten Sitzes 24 eine Mündung 12 vorliegen. In jeder Seite 5, 6 ist die Durchgänge 4 umfassend eine kreisrunde Nut 9 zur Aufnahme einer Ringdichtung 23 (Fig. 3) in das Sitzgehäuse 1 eingearbeitet.

In Fig. 3 ist zu sehen, dass dem als kreisrunde Kante, gegebenenfalls mit einer Fase, ausgebildeten Sitz 24 ein Tellerventil 15 zugeordnet ist, das einen Teller 16 und einen zentrischen Schaft 17 aufweist, der nach oben in die Aufsteuerung 2 ragt und der durch eine schwache Nachsaugfeder 20 in Richtung zur gezeigten Absperrstellung am Sitz 24 beaufschlagt wird. In der Aufsteuerung 2 ist ferner ein Aufsteuerkolben 14 enthalten, der gegen eine kräftige Aufsteuerfeder 21 hydraulisch über eine Leitung 22 beaufschlagbar ist, um das Füllventil F hydraulisch aufzusteuern.

Der Teller 16 hat eine annähernd ebene oder leicht bombierte Oberseite 18 und eine deutlich zentrisch bombierte Unterseite 19, wobei vom Schaft 17 ein konkav gerundeter Übergang zur Oberseite 18 führt.

Zumindest in der Ringnut 9 an der Seite 6 ist eine Ringdichtung 23 enthalten, die einen inneren Nutzdurchmesser N des Füllventils F definiert, beispielsweise entsprechend dem Innendurchmesser eines strichpunktiert angedeuteten Pressenzylinders Z, auf oder in dem das Füllventil F zu montieren ist. An der Seite 5 ist strichpunktiert der Durchmesser eines Tanks T angedeutet.

An der Seite 6 ist ein annähernd einem Viertelkreis entsprechender konkav geformter Übergang 25 zum Sitz 24 geformt. Dieser in Umfangsrichtung verlaufende Übergang 25 gehört zu einer zentrischen, z. B. durch Drehbearbeitung, gebildeten Vertiefung 26 in der Seite 6, die außerhalb der beiden Mündungen 12 eine im Wesentlichen ebene und zur Achse 40 senkrechte Deckwand 27 aufweist, die einen ringförmigen Wulst 28 um eine Aufnahmebohrung 29 für den Schaft 17 umfasst. Der ringförmige Wulst 28 ist beginnend an der Deckwand 27 bis in die Aufnahmebohrung 29 konkav gerundet. An der Randseite der Vertiefung 26 ist eine leichte Hinterschneidung 30 gedreht.

Der in Richtung der Achse 40 gesehene Abstand X der Deckwand 27 vom Sitz 24 beträgt etwa 5 % - 8 % des Nutzdurchmessers N, gegebenenfalls sogar bis zu 10 %. Die Durchgänge 4 sind mit dem Sitz 24 und der Vertiefung verschnitten.

Fig. 4 verdeutlicht die geometrische Gestaltung vor allem der beiden Durchgänge 4 bis zum Sitz 24 bzw. dem Wulst 28. Die Außenwand 13 jedes Durchgangs 4 weist eine im Wesentlichen geradlinige Erzeugende auf und ist erfindungsgemäß mit einem Neigungswinkel α zwischen 25° und 20° gegenüber der Achse 40 in Richtung zum Sitz 24 einwärts geneigt. Die Innenwand 31 kann den gleichen Neigungswinkel α aufweisen wie die Außenwand 13.

Bevorzugt, und wie dargestellt, weist die Innenwand 31 jedoch einen größeren Neigungswinkel β zwischen 40° und 25° bezogen auf die Achse 40 auf, wobei der Neigungswinkel β der Innenwand umso kleiner ist, desto kleiner der Neigungswinkel α ist. Aufgrund der unterschiedlichen Neigungswinkel α und β erweitert sich die Durchgangsweite in Richtung zum Sitz 24. Allerdings müssen die Innen- und die Außenwand separat bearbeitet, z.B. gefräst werden.

Die Außenwand 13 führt über eine konvexe Rundung 39 und einen annähernd achsparallelen Übergang 32 zum Sitz 24, wobei der Übergang 32 eine Höhe y aufweist, die, vorzugsweise, etwa 10 % des Sitzdurchmessers d beträgt. Die Höhe des Sitzgehäuses 1 beträgt beispielsweise etwa 60 % des Sitzdurchmessers d.

Falls jeder Durchgang 4 mit zueinander parallelen Innen- und Außenwänden 13, 31 durch Fräsen geformt wird, ist die Bearbeitung in einem Arbeitszug entweder von der Seite 5 oder der Seite 6 aus möglich. Ist der Neigungswinkel β der Innenwand 31 verschieden vom Neigungswinkel α der Außenwand 31, und zwar zumindest in einem Bereich angrenzend an die Höhenposition des Sitzes 24 bzw. im unteren Teil bis zum Wulst 28, dann ist ein zweiter Arbeitsschritt zum Freifräsen des Neigungswinkel β erforderlich, der aber wiederum in einem Arbeitszug von beispielsweise der Seite 6 aus durchgeführt werden kann.

Anstelle der zwei nierenförmigen Durchgänge 4 könnte auch ein Bohrungskranz z.B. mit acht oder neun gleichen Bohrungen vorgesehen sein. Den nierenförmigen Durchgängen 4 wird jedoch der Vorzug gegeben.

Fig. 5 zeigt das Füllventil F bei in einer Ansaugsituation gegen die Ansaugfeder 20 vom Sitz 24 abgehobenem Tellerventil 15. Das Füllventil F wird dann von oben nach unten, das heißt von T nach Z, durchströmt. Für eine Durchströmung in der entgegengesetzten Strömungsrichtung kann das Tellerventil 15 in die gleiche maximale Hubstellung durch Beaufschlagen des Aufsteuerkolbens 14 gegen die Aufsteuerfeder 21 gebracht werden.

## Patentansprüche

1. Füllventil (F), insbesondere für eine hydraulische Presse oder Spritzgussmaschine, mit einem einen zentralen Sitz (24) für ein axial bewegliches Tellerventil (15) aufweisenden Sitzgehäuse (1), in dem zwischen eine Aufsteuerung (2) tragenden Stegen (3) mindestens zwei Durchgänge (4) zum Sitz (24) ausgebildet sind, deren jeder eine Außenwand (13) und eine Innenwand (31) jeweils mit überwiegend geradliniger Erzeugender aufweist, die von einer Mündung (11) an der dem Teller (16) des Tellerventils (15) abgewandten Seite (5) des Sitzgehäuses (1) in Richtung zum Sitz (24) schräg einwärts geneigt sind, **dadurch gekennzeichnet, dass** in dem aus Stahl zumindest spanend gefertigten Sitzgehäuse (1) die jeweilige Außenwand (13) des Durchgangs (4) mit der Achse (40) des Sitzes (24) einen Neigungswinkel (α) zwischen 20° und 25° einschließt, und dass entweder die Innenwand (31) und die Außenwand (13) gleiche Neigungswinkel mit der Achse (40) einschließen, oder die Innenwand (31) zumindest angrenzend an die Höhenposition des Sitzes (24) im Sitzgehäuse (1) mit der Achse (40) einen Neigungswinkel (β) zwischen 40° und 25° einschließt, wobei der zwischen der Innenwand (31) und der Achse (40) eingeschlossene Neigungswinkel (β) zwischen 40° und 25° umso kleiner ist, desto kleiner der zwischen der Außenwand (13) und der Achse (40) eingeschlossene Neigungswinkel (α) ist.

2. Füllventil nach Anspruch 1, **dadurch gekennzeichnet, dass** im Sitzgehäuse (1) zwei Stege (3), vorzugsweise mit in Richtung zum Sitz (24) abnehmender Stegstärke, und zwischen diesen zwei nierenförmige, vorzugsweise zur Achse (40) konzentrische, gefräste Durchgänge mit im Wesentlichen konischen Innen- und Außenwänden (13, 31) vorgesehen sind, deren Konusachse die Achse (40) ist.

3. Füllventil nach wenigstens einem der vorhergehenden Ansprüche, **dadurch gekennzeichnet, dass** die Außenwand (13) mit einer konvexen Rundung (39) zu einem annähernd achsparallelen Übergang (32) zum Sitz (24) führt, der, vorzugsweise, etwa 10% des Sitzdurchmessers (d) lang ist.

4. Füllventil nach wenigstens einem der vorhergehenden Ansprüche, **dadurch gekennzeichnet, dass** die Innenwand (31) an einem ringförmigen Wulst (28) endet, der - in einem Achsschnitt gesehen - von der Innenwand (31) bis in eine Aufnahmebohrung (29) des Schafts (17) des Tellerventils (15) konvex gerundet ist.

5. Füllventil nach Anspruch 1, **dadurch gekennzeichnet, dass** in den Seiten (5, 6) des Sitzgehäuses (1) Ringdichtungen (23) versenkt angeordnet sind, die einen inneren Nutzdurchmesser (N) des Füllventils (F) definieren, und dass der Sitzdurchmesser (d) etwa 75 % bis 85 % des Nutzdurchmessers (N) entspricht.

6. Füllventil nach Anspruch 1, **dadurch gekennzeichnet, dass** der Teller (16) des Tellerventils (15) zum Durchgang (4) weisend eine nahezu ebene Oberseite (18), und eine zentrisch bombierte Unterseite (19) aufweist.

7. Füllventil nach wenigstens einem der vorhergehenden Ansprüche, **dadurch gekennzeichnet, dass** - in einem Achsschnitt des Sitzgehäuses (1) gesehen - zwischen dem Sitz (24) und der Teller-Seite (6) des Sitzgehäuses (1) umlaufend eine konkave, annähernd einem Vierteilkreis folgende Rundung (25) vorgesehen ist.

8. Füllventil nach Anspruch 4, **dadurch gekennzeichnet, dass** - zumindest in einem Achsschnitt durch die Stege (3) gesehen - an der Teller-Seite (6) des Sitzgehäuses (1) im Anschluss an den Sitz (24) eine zentrische, kreisrunde drehbearbeitete Vertiefung (26) mit einer den Wulst (28) umfassenden, ebenen und zur Achse (40) senkrechten Deckwand (27) und einer randseitigen Hinterschneidung (30) vorgesehen ist, mit der zumindest die Innenwände (31) verschnitten sind.

9. Füllventil nach Anspruch 2, **dadurch gekennzeichnet, dass** zwischen der Innenwand (31) und der Außenwand (13) des Durchgangs (4) an den Enden der Nierenform in etwa halbkreisförmig konkave und die Stege (3) begrenzende Übergänge (38) geformt sind.

## Claims

1. Fill valve (F), in particular for a hydraulic press or an injection-moulding machine, comprising a seat housing (1) having a central seat (24) for an axially movable disc valve (15), in which seat housing at least two openings (4) to the seat (24) are formed between connecting portions (3) which support an opening means (2), which openings each comprise an outer wall (13) and inner wall (31) each having predominantly straight generatrices which are inclined obliquely inwards towards the seat (24) from an outlet (11) in the side (5) of the seat housing (1) facing away from the disc (16) of the disc valve (15), **characterised in that** in the seat housing (1), which is at least machined from steel, the outer wall (13) of each opening (4) forms an inclination angle (α) of between 20° and 25° with the axis (40) of the seat (24), and **in that** either the inner wall (31) and the outer wall (13) form the same inclination angles with the axis (40), or the inner wall (31) forms an inclination angle (β) of between 40° and 25° with the axis (40), at least adjacent to the vertical position of the seat (24) in the seat housing (1), and the smaller the inclination angle (α) between the outer wall (13) and the axis (40), the smaller the inclination angle (β) of between 40° and 25° between the inner wall (31) and the axis (40).

2. Fill valve according to claim 1, **characterised in that** provided in the seat housing (1) are two connecting portions (3), preferably decreasing in thickness towards the seat (24), and two reniform milled openings therebetween, which are preferably concentric with the axis (40) and have substantially conical inner and outer walls (13, 31), the cone axis of which is the axis (40).

3. Fill valve according to at least one of the preceding claims, **characterised in that** the outer wall (13) leads, by means of a convex rounded region (39), to an approximately axially-parallel transition (32) to the seat (24), the length of which transition is preferably approximately 10 % of the seat diameter (d).

4. Fill valve according to at least one of the preceding claims, **characterised in that** the inner wall (31) ends at an annular bead (28) which, viewed in an axial section, is convexly rounded from the inner wall (31) as far as into a receiving hole (29) for the stem (17) of the disc valve (15).

5. Fill valve according to claim 1, **characterised in that** annular seals (23) are arranged so as to be countersunk in the sides (5, 6) of the seat housing (1) and define an inner usable diameter (N) of the fill valve (F), and **in that** the seat diameter (d) corresponds to approximately from 75 % to 85 % of the usable diameter (N).

6. Fill valve according to claim 1, **characterised in that** the disc (16) of the disc valve (15) that points towards the opening (4) comprises an approximately planar upper face (18) and a centrally domed lower face (19).

7. Fill valve according to at least one of the preceding claims, **characterised in that**, viewed in an axial section of the seat housing (1), a concave rounded region (25) which approximately follows a quarter circle is provided peripherally between the seat (24) and the disc side (6) of the seat housing (1).

8. Fill valve according to claim 4, **characterised in that**, at least when viewed in an axial section through the connecting portions (3), provided on the disc side (6) of the seat housing (1) adjacently to the seat (24) is a central, circular, rotationally machined recess (26) having a planar top wall (27), which comprises the bead (28) and is perpendicular to the axis (40), and an edge undercut (30), by means of which at least the inner walls (31) are cut back.

9. Fill valve according to claim 2, **characterised in that** transitions (38) which are approximately concave in the shape of a semicircle and delimit the connecting portions (3) are formed at the ends of the kidney shape between the inner wall (31) and the outer wall (13) of the opening (4).

## Revendications

1. Soupape de remplissage (F), en particulier pour une presse ou une machine de moulage par injection hydrauliques, comprenant un boîtier de siège (1) présentant un siège (24) central pour une soupape à volet (15) pouvant être déplacée de manière axiale, dans lequel sont réalisés, entre des entretoises (3) supportant une commande d'ouverture (2), au moins deux passages traversants (4) menant au siège (24), chacun desquels passages traversants présente une paroi extérieure (13) et une paroi intérieure (31) comprenant respectivement une génératrice majoritairement rectiligne, lesquelles sont inclinées à l'oblique vers l'intérieur depuis une embouchure (11), au niveau du côté (5) opposé au volet (16) de la soupape à volet (15), en direction du siège (24), **caractérisée en ce que** dans le boîtier de siège (1) produit au moins par enlèvement de copeaux à partir d'acier, la paroi extérieure (13) respective du passage traversant (4) forme, avec l'axe (40) du siège (40), un angle d'inclinaison (α) entre 20° et 25°, et **en ce que** soit la paroi intérieure (31) et la paroi extérieure (13) forment des angles d'inclinaisons égaux avec l'axe (40), soit la paroi intérieure (31) jouxtant au moins la position en hauteur du siège (24) dans le boîtier de siège (1) forme avec l'axe (40) un angle d'inclinaison (β) entre 40° et 25°, dans laquelle plus l'angle d'inclinaison (β), formé entre la paroi intérieure (31) et l'axe (40), entre 40° et 25° est petit, plus l'angle d'inclinaison (α) formé entre la paroi extérieure (13) et l'axe (40) est petit.

2. Soupape de remplissage selon la revendication 1, **caractérisée en ce que** sont prévues, dans le boîtier de siège (1), deux entretoises (3), de préférence présentant une épaisseur d'entretoise diminuant en direction du siège (24), et, entre ces dernières, deux passages traversants en forme de haricot, de préférence concentriques par rapport à l'axe (40), usinés, comprenant des parois intérieures et extérieures (13, 31) sensiblement coniques, dont l'axe de cône constitue l'axe (40).

3. Soupape de remplissage selon au moins l'une quelconque des revendications précédentes, **caractérisée en ce que** la paroi extérieure (13) présentant un arrondi (39) convexe mène à un passage (32) approximativement parallèle axialement menant au siège (24), lequel passage présente de préférence une longueur à peu près de 10 % du diamètre de siège (d).

4. Soupape de remplissage selon au moins l'une quelconque des revendications précédentes, **caractérisée en ce que** la paroi intérieure (31) se termine au niveau d'un bourrelet (28) de forme annulaire, qui - vu dans une coupe axiale - est arrondi, de manière convexe en partant de la paroi intérieure (31) jusque dans un alésage de logement (29) de la tige (17) de la soupape à volet (15).

5. Soupape de remplissage selon la revendication 1, **caractérisée en ce que** sont disposés de manière enfoncée, dans les côtés (5, 6) du boîtier de siège (1), des joints toriques (23), qui définissent un diamètre utile (N) intérieur de la soupape de remplissage (F), et **en ce que** le diamètre de siège (d) correspond à peu près à 75 % à 85 % du diamètre utile (N).

6. Soupape de remplissage selon la revendication 1, **caractérisée en ce que** le volet (16) de la soupape à volet (15) pointant en direction du passage traversant (4) présente un côté supérieur (18) quasiment plan et un côté inférieur (19) bombé au centre.

7. Soupape de remplissage selon au moins l'une quelconque des revendications précédentes, **caractérisée en ce que** - vu dans une coupe axiale du boîtier de siège (1) - un arrondi (25) concave, suivant approximativement un quart de cercle - est prévu en périphérie entre le siège (24) et le côté de volet (6) du boîtier de siège (1).

8. Soupape de remplissage selon la revendication 4,
**caractérisée en ce que** - au moins vu dans une coupe axiale des entretoises (3) - un renfoncement (26) central, usiné par tournage et circulaire, pourvu d'une paroi de recouvrement (27) comprenant le bourrelet (28), plane et perpendiculaire par rapport à l'axe (40) et d'une contre-dépouille (30) située côté bord est prévu au niveau du côté de volet (6) du boîtier de siège (1) dans le prolongement du siège (24), lequel coupe au moins les parois intérieures (31).

9. Soupape de remplissage selon la revendication 2, **caractérisée en ce que** des passages (38) concaves en une forme à peu près de demi-cercle et délimitant les entretoises (3) sont formés entre la paroi intérieure (31) et la paroi extérieure (13) du passage traversant (4), au niveau des extrémités de la forme de haricot.
